(19) Europäisches Patentamt / European Patent Office / Office européen des brevets

(11) **EP 1 389 889 B1**

(12) **FASCICULE DE BREVET EUROPEEN**

(45) Date de publication et mention
de la délivrance du brevet:
**19.06.2013 Bulletin 2013/25**

(51) Int Cl.:
*H04W 72/04* *(2009.01)*    *H04L 29/06* *(2006.01)*
*H04W 36/12* *(2009.01)*

(21) Numéro de dépôt: **03291876.5**

(22) Date de dépôt: **29.07.2003**

(54) **Procédé pour l'allocation de ressources en mode paquet dans un système de radiocommunications mobiles**

Verfahren zur Reservierung von Kapazität in einem im "Paket-Modus" arbeitenden Mobilfunksystem

Method to allocate resources in a mobile radiocommunication system in packet mode

(84) Etats contractants désignés:
**AT BE BG CH CY CZ DE DK EE ES FI FR GB GR HU IE IT LI LU MC NL PT RO SE SI SK TR**

(30) Priorité: **14.08.2002 FR 0210323**

(43) Date de publication de la demande:
**18.02.2004 Bulletin 2004/08**

(60) Demande divisionnaire:
**10179821.3 / 2 293 636**

(73) Titulaire: **Alcatel Lucent**
**75007 Paris (FR)**

(72) Inventeur: **Muniere, Vincent**
**92190 Meudon (FR)**

(74) Mandataire: **El Manouni, Josiane et al**
**Alcatel-Lucent International**
**32, avenue Kléber**
**92700 Colombes (FR)**

(56) Documents cités:
- **"Digital cellular telecommunication system (Phase 2+); General Packet Radio Service (GPRS); Mobile Station (MS)-Base Station System (BSS) interface; Radio Link Control/ Medium Access Control (RLC/MAC) protocol (GSM 04.60 version 8.15.0 Release 1999)" ETSI TS 101 349 V8.15.0, juillet 2002 (2002-07), pages 1-32,37-47,115,146,149,259,267-270, XP002240614**
- **BALACHANDRAN K ET AL: "MAC laver desian for statistical multiplexing of voice and data over EGPRS" IEEE, vol. 2, 23 septembre 2000 (2000-09-23), pages 913-923, XP010532374**
- **"TCP over Second (2.5G) and Third (3G) Generation Wireless Networks; NETWORK WORKING GROUP; Internet-Draft; draft-ietf-pilc-2.5g3g-10" NETWORK WORKING GROUP; INTERNET-DRAFT, 1 juillet 2002 (2002-07-01), pages 1-29, XP002240615**
- **"Digital cellular telecommunications system (Phase 2+) (GSM); Universal Mobile Telecommunications System (UMTS); General Packet Radio Service (GPRS); Service description; Stage 2 (3GPP TS 23.060 version 3.2.1 Release 1999)" ETSI TS 123 060 V3.2.1, janvier 2000 (2000-01), pages 166-169, XP002240616**
- **H. AFIFI, CH. E. PERKINS, H. FLINCK, L. MORAND: "Internet General Packet Radio Service (IGPRS) Service Description; MOBILE IP WORKING GROUP INTERNET DRAFT; draft-hossam-igprs-01.txt" MOBILE IP WORKING GROUP INTERNET DRAFT, 13 février 2002 (2002-02-13), pages 1-31, XP002240617**

**Description**

La présente invention concerne d'une manière générale les systèmes de radiocommunications mobiles.

La présente invention concerne plus particulièrement les services en mode paquet, tels que notamment le GPRS ("General Packet Radio Service") pour les systèmes de radiocommunications mobiles de type GSM ("Global System for Mobile communications").

D'une manière générale, ces systèmes font l'objet de normalisation, et pour plus d'informations on pourra se référer aux normes correspondantes, publiées par les organismes de normalisation correspondants.

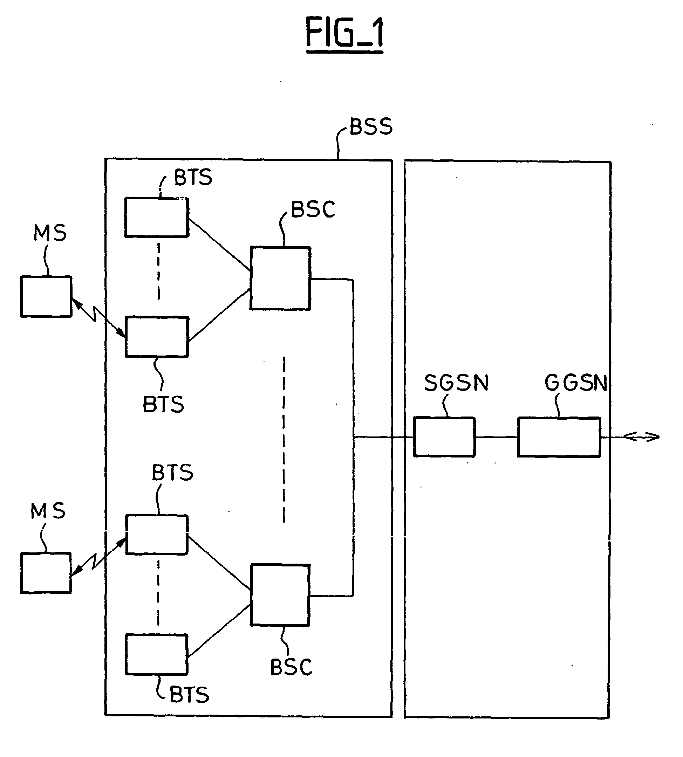

L'architecture des systèmes en mode paquet tels que par exemple les systèmes de type GPRS est rappelée sur la figure 1, elle comporte essentiellement:

-    un sous-système de stations de base, ou BSS ("Base Station Subsystem"), en relation avec des stations mobiles ou MS (« Mobile Station »), et comportant des stations de base ou BTS ("Base Transceiver Station") et des contrôleurs de stations de base ou BSC ("Base Station Controller"),
-    un sous-système de réseau GPRS, en relation d'une part avec le BSS et d'autre part avec des réseaux extérieurs (non illustrés), et comportant des entités ou noeuds de sous-système de réseau GPRS, telles que les entités SGSN ("Serving GPRS Support Node") ou GGSN (« Gateway GPRS Support Node ».

Selon l'architecture en couches utilisée pour décrire ces systèmes, on distingue, sur l'interface entre MS et BSS, ou interface radio, ou interface « Um »:

-    une première couche, ou couche physique,
-    une deuxième couche, ou couche liaison, elle-même divisée en plusieurs couches: par ordre de niveaux croissants, MAC (« Médium Access Control »), RLC (« Radio Link Control ») et LLC (« Logical Link Control », le BSS n'étant utilisé que pour une fonction de relais entre MS et sous-système de réseau GPRS, pour la couche LLC).

De même, on distingue, sur l'interface entre BSS et sous-système de réseau GPRS, ou interface « Gb »:

-    une première couche, ou couche physique,
-    une deuxième couche, ou couche liaison, elle-même divisée en plusieurs couches : par ordre de niveaux croissants, « Network service », BSSGP (« BSS GPRS Protocol»), et LLC (« Logical Link Control », le BSS n'étant utilisé que pour une fonction de relais entre MS et sous-système de réseau GPRS, pour la couche LLC).

Des trames appelées trames LLC sont formées, dans la couche LLC, à partir d'unités de données de niveau supérieur. Dans les trames LLC ces unités de données sont appelées unités de données LLC-PDU (« LLC-Protocol Data Units »).

Les unités de données LLC-PDU sont ensuite segmentées dans la couche RLC/MAC, de manière à former des blocs appelés blocs de données RLC (« RLC data blocks »). Les blocs de données RLC sont ensuite mis au format requis pour transmission sur l'interface « Um », dans la couche physique.

En outre, dans les couches RLC et LLC sont mises en oeuvre des procédures de re-transmission de données non correctement reçues (blocs de données RLC ou unités de données LLC-PDU selon le cas), selon une technique appelée aussi ARQ ("Automatic Repeat reQuest"). L'état, correct ou non, des blocs ou unités de données reçus est signalé par le récepteur à l'émetteur au moyen de messages dits d'acquittement ou ACK ("ACKnowledgment") ou de non-acquittement ou NACK ("Non-ACKnowledgment").

En outre, des protocoles de signalisation de niveau supérieur sont également prévus, notamment pour la gestion de la mobilité ou MM (« Mobility Management»), la gestion de session ou SM (« Session Management»), ...etc.

Dans ce qui suit, on rappelle certaines procédures relatives au protocole RLC/MAC sur l'interface entre MS et BSS. Pour une description plus complète de ce protocole, on pourra se référer notamment à la spécification 3GPP TS 04.60 publiée par le 3GPP (« 3rd Generation Partnership Project »).

On rappelle que les canaux logiques en mode paquet comportent les canaux suivants:

-    PBCCH (« Packet Broadcast Control CHannel »), ou canaux de diffusion, utilisés pour transmettre des informations système dans une cellule,
-    PCCCH (« Packet Common Control CHannel »), ou canaux de contrôle communs, comportant eux-mêmes les canaux suivants:

-    PRACH (« Packet Random Access CHannel ») utilisé pour l'accès au réseau,
-    PPCH (« Packet Paging CHannel ») utilisé pour la recherche d'abonnés (ou « paging »),
-    PAGCH (« Packet Access Grant CHannel ») utilisé pour l'allocation de ressources en mode paquet,
-    PNCH (« Packet Notification CHannel ») utilisé pour notifier les stations mobiles d'un appel point-à-multipoint,
-    PDTCH (« Packet Data Transfer CHannel »), utilisés pour le transfert de données, et PACCH (« Packet Associated Control CHannel ») ou canaux de contrôle associés, utilisés notamment pour transmettre des acquittements (ACK/NACK) ou des messages d'allocation / modification de ressources en mode paquet.

Certains canaux en mode paquet tels que notamment les canaux PBCCH et PCCCH peuvent ne pas être établis dans une cellule. Dans ce cas, les stations mobiles en mode paquet utilisent des canaux en mode circuit tels que les canaux BCCH (« Broadcast Control CHannel ») et CCCH (« Packet Common Control CHannel »), ces derniers incluant notamment les canaux RACH (« Random Access CHannel »), PCH (« Paging CHannel »), AGCH (« Access Grant CHannel ») et NCH (« Notification CHannel »). Pour indiquer une telle possibilité, on utilise aussi, à titre d'exemple pour les canaux PBCCH et BCCH, la notation (P)BCCH.

En mode paquet, une station mobile peut être :

- soit dans un mode dit « packet transfer mode », dans lequel des ressources sont allouées temporairement, lorsque des données sont effectivement à transmettre au cours d'une communication, ces ressources formant une connexion temporaire en mode paquet ou TBF (« Temporay Block Flow »), pour un sens de transmission donné,
- soit dans un mode dit « packet idle mode » dans lequel aucun TBF n'est établi.

D'une manière générale, les données transférées au moyen d'un TBF peuvent être des données appelées ici données utilisateur ou données usager (pour « user data » en anglais), ou des données appelées ici données de signalisation, échangées dans le cadre de protocoles de niveau supérieur, tels que par exemple le protocole de gestion de mobilité ou MM (« Mobility Management »),...etc.

Un TBF dans le sens montant, ou UL TBF (« UpLink TBF »), peut être établi soit sur les canaux de contrôle communs (P)CCCH, soit sur le canal PACCH d'un TBF dans le sens descendant, ou DL TBF (« DownLink TBF ») en cours simultanément pour cette station mobile.

L'établissement d'un UL TBF sur les canaux de contrôle communs (P)CCCH est initié par l'envoi par la station mobile au réseau d'un message PACKET CHANNEL REQUEST sur le canal PRACH (ou d'un message CHANNEL REQUEST sur le canal RACH). Suivant les besoins de la station mobile pour ce transfert, différentes causes peuvent être utilisées lors d'une demande d'établissement d'un UL TBF: accès en une phase (ou « one phase access » ), accès appelé « short access », accès en deux phases (ou « two phase access »), mise à jour de cellule (ou « cell update »), réponse à une requête de « paging » (ou « page response »), procédure de gestion de mobilité (ou « MM procédure »), requête d'un seul bloc sans établissement de TBF (ou « Single block without TBF establishment »).

On rappelle brièvement, à titre d'exemple, les étapes suivantes dans le cas d'accès en une phase ou en deux phases:

- Dans le cas de l'accès en une seule phase le réseau répond par un message IMMEDIATE ASSIGN-MENT (respectivement PACKET UPLINK ASSIGN-MENT) sur le canal AGCH (respectivement PAGCH), ce message indiquant directement à la station mobile les ressources paquet, ou canaux PDCH alloués.

- Dans le cas de l'accès en deux phases le message IMMEDIATE ASSIGNMENT (PACKET UPLINK ASSIGNMENT) sur le canal (P)AGCH alloue à la station mobile un bloc radio sur un canal PDCH, qu'elle peut utiliser pour transmettre un message PACKET RESOURCE REQUEST contenant une description plus précise des ressources en mode paquet requises. Le réseau répond ensuite par un message PACKET UPLINK ASSIGNMENT, ce message indiquant à la station mobile les ressources en mode paquet, ou canaux PDCH alloués.

Dans le cas de l'établissement d'un TBF dans le sens montant (ou UL TBF) sur le canal PACCH d'un TBF dans le sens descendant (ou DL TBF) en cours simultanément pour cette station mobile, le réseau envoie le message PACKET UPLINK ASSIGNMENT sur ce canal PACCH.

Un TBF dans le sens descendant, ou DL TBF (« DownLink TBF »), peut être établi soit sur des canaux de contrôle communs (P)CCCH, soit sur le canal PACCH d'un TBF dans le sens montant, ou UL TBF (« UpLink TBF ») en cours simultanément pour cette station mobile.

Dans le cas de l'établissement d'un DL TBF sur les canaux de contrôle communs, si le SGSN n'a pas connaissance de la cellule dans laquelle est localisée la station mobile, il peut tout d'abord initier une procédure de « paging » en mode paquet via les BSCs susceptibles de contrôler ladite cellule. Un échange de signalisation est ensuite prévu sur les canaux (P)CCCH, incluant l'émission par la station mobile d'un message CHANNEL REQUEST (ou PACKET CHANNEL REQUEST sur PRACH) en réponse au « paging » puis l'envoi par le réseau à la station mobile d'un message PACKET UPLINK ASSIGNMENT indiquant à la station mobile les ressources en mode paquet, ou canaux PDCH alloués, sur lesquelles ladite station mobile pourra envoyer sa réponse au SGSN. Par la suite, ayant déterminé la cellule dans laquelle se trouve la station mobile, le SGSN pourra envoyer des unités de données LLC vers la BSC correspondante, qui établira alors un DL TBF soit sur canal commun (P)CCCH, soit sur le canal PACCH de l'UL TBF s'il est toujours en cours. Pour établir un DL TBF sur canal commun, la BSC envoie un message IMMEDIATE ASSIGNMENT sur CCCH, ou PACKET DOWNLINK ASSIGNMENT sur PCCCH, ce message indiquant à la station mobile les ressources en mode paquet, ou canaux PDCH alloués.

Dans le cas de l'établissement d'un DL TBF sur le canal PACCH d'un UL TBF en cours simultanément pour cette station mobile, le réseau envoie le message PACKET DOWNLINK ASSIGNMENT sur ce canal PACCH.

Par ailleurs, ces systèmes ont une architecture cellulaire, et des mécanismes de changement de cellule sont prévus. Dans ce qui suit, on rappelle certaines procédures relatives à ces mécanismes de changement de cellule. Pour une description plus complète de ces mécanismes, on pourra se référer notamment aux spécifications 3GPP TS 04.60 et 3GPP TS 05.08 publiées par le 3GPP (« 3rd Generation Partnership Project »).

Pour les services en mode paquet, on utilise généralement une procédure dite de resélection de cellule, et on distingue généralement plusieurs modes de contrôle de resélection de cellule, correspondant à des degrés d'autonomie décroissants de la station mobile, ou, ce qui revient au même, à des degrés de contrôle croissants par le réseau. Par exemple, dans le cas du GPRS, ces différents modes de contrôle incluent:

- un premier mode de contrôle (appelé aussi NC0), dans lequel la station mobile décide de manière autonome d'effectuer un changement de cellule et sélectionne elle-même la cellule cible, en tenant compte de résultats de mesures qu'elle effectue,
- un deuxième mode de contrôle ( appelé aussi NC1), dans lequel la station mobile décide de manière autonome d'effectuer un changement de cellule et sélectionne elle-même la cellule cible, en tenant compte de résultats de mesures qu'elle effectue, et transmet par ailleurs les résultats de ces mesures au réseau,
- un troisième mode de contrôle (appelé aussi NC2), dans lequel le réseau décide d'effectuer un tel changement de cellule et sélectionne la cellule cible, en tenant compte de résultats de mesures que lui transmet la station mobile.

Les modes de contrôle NC0 et NC1 correspondent ainsi à un mode de resélection de cellule contrôlé par la station mobile. Dans ce cas la station mobile décide elle-même d'une resélection de cellule.

Le mode de contrôle NC2 est aussi appelé resélection de cellule contrôlée par le réseau. Dans ce cas, une resélection de cellule est ordonnée par le réseau à la station mobile, dans un message appelé « Packet Cell Change Order» contenant l'identité de la cellule resélectionnée.

Dans l'un ou l'autre des modes de contrôle tels que par exemple NC0, NC1, NC2, une fois que la station mobile a effectué avec succès les opérations nécessaires pour se connecter en mode paquet à la cellule cible resélectionnée, elle transmet au réseau, selon le protocole de gestion de mobilité ou MM (pour « Mobility Management ») un message de mise à jour de cellule servant à indiquer l'identité de la cellule cible resélectionnée. Si la station mobile n'a pas de données usager à transmettre, elle envoie une LLC PDU vide au SGSN et utilise la cause « cell update » lors de la demande d'établissement d'UL TBF servant à envoyer ladite LLC PDU, lorsque le PBCCH est établi. Si le PBCCH n'est pas établi dans la cellule, la station mobile demande un établissement en une phase. Alternativement, si la station mobile a des données usager à transférer dans le sens montant, elle doit transmettre un message de requête de ressources en mode paquet demandant au réseau d'établir un UL TBF. Une fois l'UL TBF établi, la station mobile doit envoyer ses données usager, celles-ci étant aussi interprétées par le SGSN comme une mise à jour de cellule. A la détection de la mise à jour de cellule, le SGSN peut alors reprendre, vers la nouvelle cellule le transfert de données interrompu vers l'ancienne cellule.

Par ailleurs, la normalisation du GPRS a évolué, notamment avec l'introduction de l'EGPRS (« Enhanced General Packet Radio Service ») qui autorise des débits très supérieurs à ceux offerts par le GPRS, grâce à des techniques de modulation ayant une meilleure efficacité spectrale.

Pour une description de l'EGPRS, on pourra se référer par exemple au document BAALACHANDRAN K ET AL : 'MAC layer design for statistical multiplexing of voice and data over EGPRS' IEE, vol.2 23 septembre 2000 (2000-09-23), pages 913-923, XP010532374.

Cependant, au sein d'un même système, toutes les stations mobiles et toutes. les cellules ne supportent pas nécessairement l'EGPRS. Dans ce qui suit, on rappelle certaines procédures permettant au GPRS et à l'EGPRS de co-exister au sein d'un même système. Pour une description plus complète de ces procédures, on pourra se référer notamment à la spécification 3GPP TS 04.60 publiée par le 3GPP («3rd Génération Partnership Project »).

On distingue deux modes possible pour un TBF, un TBF en mode GPRS, et un TBF en mode EGPRS. En outre, lorsqu'une station mobile a simultanément un UL TBF et un DL TBF en cours, ces deux TBF doivent être dans le même mode: soit GPRS, soit EGPRS.

Par ailleurs, comme les messages dé requête de ressources en mode paquet rappelés précédemment, à savoir PACKET CHANNEL REQUEST ou CHANNEL REQUEST, n'indiquent pas eux-mêmes si la station mobile supporte l'EGPRS, un nouveau message de requête de ressources en mode paquet appelé EGPRS PACKET CHANNEL REQUEST a été introduit.

Toutes les cellules ne supportent pas nécessairement le message EGPRS PACKET CHANNEL REQUEST, et le support de ce message dans une cellule est indiqué dans des informations système diffusées dans cette cellule sur le canal (P)BCCH.

Le message EGPRS PACKET CHANNEL REQUEST peut être envoyé sur les canaux (P)CCCH. L'envoi d'un tel message par une station mobile indique en lui-même que la station mobile supporte l'EGPRS. Le seul moyen pour le réseau de savoir si une station mobile supporte l'EGPRS lors de l'établissement d'un UL TBF sur les canaux (P)CCCH est de recevoir le message EGPRS PACKET CHANNEL REQUEST. Le réseau peut alors établir un UL TBF dans le mode EGPRS. Sinon le réseau peut seulement établir un TBF dans le mode GPRS.

Dans l'état actuel de la norme, les différents cas d'utilisation de ces différents messages de requête de ressources en mode paquet sont les suivants:

- si la cellule supporte le message EGPRS PACKET CHANNEL REQUEST:

- si la station mobile souhaite effectuer un accès en une phase (ou « one phase access ») , ou un accès en deux phases (ou « two phase access ») , ou un accès appelé « short access », elle utilise le message EGPRS PACKET CHANNEL REQUEST (avec la cause appropriée),
- si la station mobile souhaite effectuer une mise à jour de cellule (ou « cell update »), ou envoyer une réponse à une requête de « paging » en mode paquet (ou « page response »), ou effectuer une procédure de gestion de mobilité (ou « MM procédure ») ou demander l'allocation d'un seul bloc radio sans établissement de TBF (ou « Single block without TBF establishment »), elle utilise le message CHANNEL REQUEST (si le canal PBCCH n'est pas présent dans la cellule), ou le message PACKET CHANNEL REQUEST (si le canal PBCCH est présent dans la cellule),
- Si la cellule ne supporte pas le message EGPRS PACKET CHANNEL REQUEST: la station mobile utilise dans tous les cas le message CHANNEL REQUEST ou le message PACKET CHANNEL REQUEST.

L'EGPRS est particulièrement intéressant pour des applications telles que notamment l'accès à Internet. Dans une telle application, les données utilisateur transférées sont des données échangées selon le protocole TCP (« Transmission Control Protocol »), lui-même défini selon le modèle TCF/IP (« Transmission Control Protocol/Internet Protocol »). Une situation typique d'une telle application correspond à un TBF dans le sens descendant établi dans le mode EGPRS pour transférer des données utiles, et un TBF dans le sens montant établi de temps à autre, également dans le mode EGPRS, pour transmettre des acquittements selon le protocole TCP (ou « TCP ACK »).

Dans une telle application, notamment, l'état actuel de la norme est à l'origine de problèmes reconnus par le demandeur et qui vont maintenant être exposés.

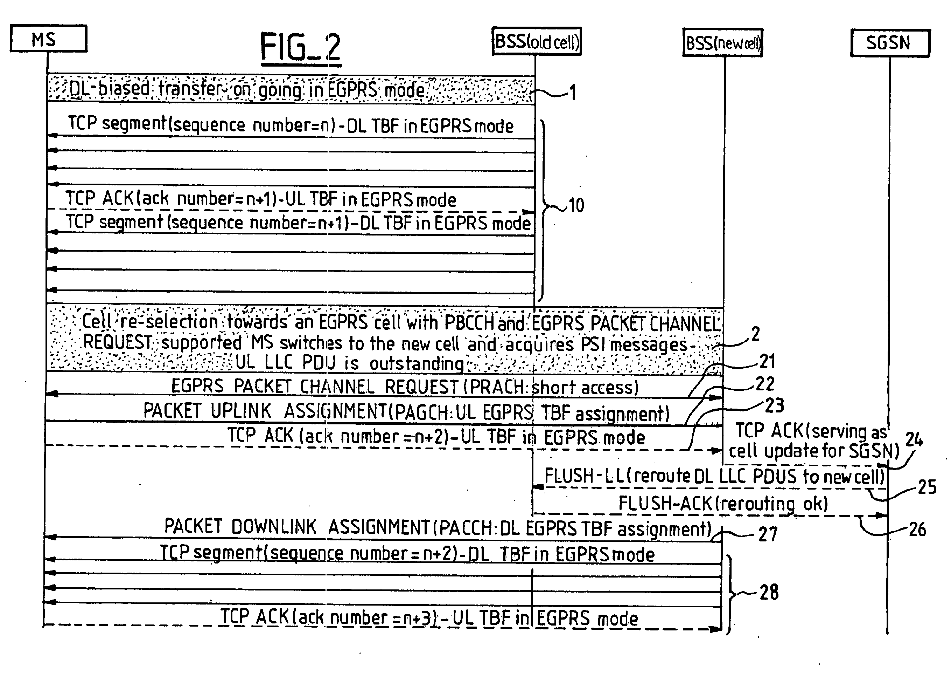

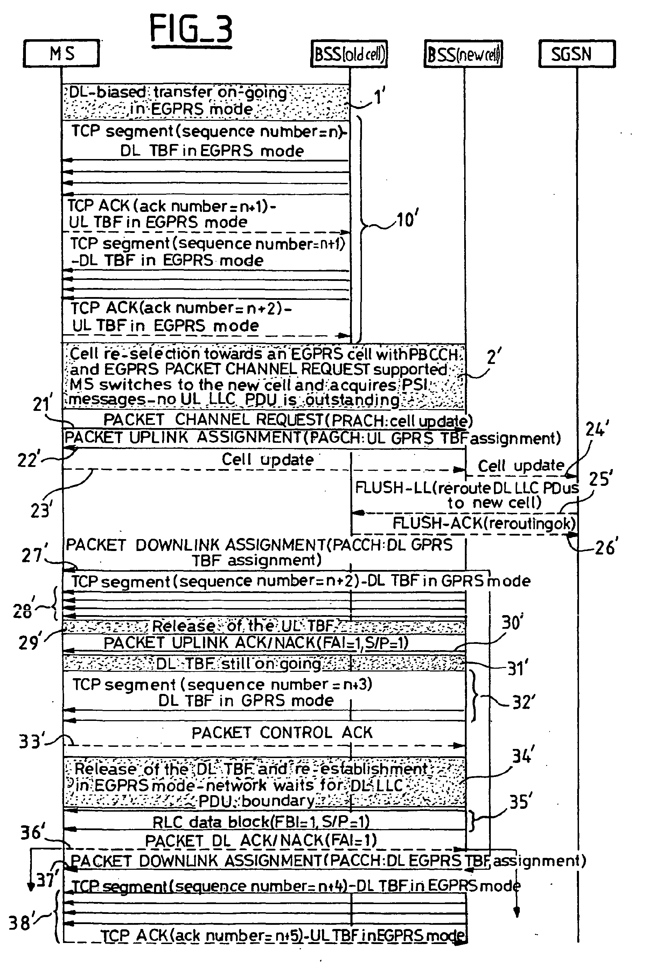

Dans les exemples illustrés sur les figures 2 et 3, on considère un état initial, noté 1 dans la figure 2, respectivement 1' dans la figure 3, correspondant à une telle situation dans laquelle un transfert de données est en cours entre un équipement correspondant à un MS (ou station mobile) et un équipement correspondant à un BSS, en l'occurrence le BSS d'une ancienne cellule, ou « BSS(old cell) », avant changement de cellule. Des segments TCP (« TCP segments »), ou unités de données échangées selon le protocole TCP, sont transmis dans le sens descendant, ces segments TCP étant repérés par un numéro de séquence (ou « séquence number »), et des acquittements (« TCP ACK ») sont alors transmis dans le sens montant, ces acquittements étant repérés par leur numéro d'ACK (ou « ACK number »).

On considère ensuite le cas d'un changement de cellule. On se place dans le cas où le MS a déterminé une re-sélection de cellule (mode NC0 ou NC1 ) ou dans le cas où une re-sélection de cellule a été ordonnée par le réseau au MS (mode NC2). On se place en outre dans le cas où le MS a effectué avec succès les opérations nécessaires pour se connecter à la nouvelle cellule re-sélectionnée (correspondant à l'équipement noté BSS (new cell)). L'état correspondant est noté 2 sur la figure 2, respectivement 2' sur la figure 3. On considère en outre le cas d'une nouvelle cellule (ou cellule re-sélectionnée) qui supporte le canal PBCCH et le message EGPRS PACKET CHANNEL REQUEST(on notera cependant que les scenarios exposés s'appliquent aussi bien au cas où il n'y a pas de PBCCH dans la cellule).

Dans l'état actuel de la norme, deux scenarios sont alors possibles pour la reprise dans la nouvelle cellule du transfert interrompu dans l'ancienne cellule.

Un premier scénario correspond au cas où le MS a encore une ou plusieurs LLC PDU(s) à envoyer au réseau (correspondant à des acquittements TCP ACKs qui n'ont pas pu être envoyés dans l'ancienne cellule).

Ce premier scenario correspond à l'exemple illustré sur la figure 2. En effet, dans cet exemple, avant de passer à l'état 2, des segments TCP ayant comme numéros de séquence « n » et « n+1 » ont été transmis dans le sens descendant, et un acquittement TCP ACK ayant comme numéro « n+1 » a été transmis dans le sens montant, mais le TCP ACK ayant comme numéro « n+2 » n'a pas encore été transmis.

Dans ce cas, pour transmettre au réseau le TCP ACK ayant comme numéro « n+2 », le MS requiert un accès appelé « short access » (ou un accès en une seule phase) au moyen du message EGPRS PACKET CHANNEL REQUEST, comme illustré en 21. Par ce moyen, le BSS(new cell) sait que le MS supporte l'EGPRS. Le BSS (new cell) peut alors allouer un UL TBF dans le mode EGPRS, comme illustré en 22 par l'envoi d'un message PACKET UPLINK ASSIGNMENT, et il pourra ensuite reprendre le transfert dans le sens descendant dans le mode EGPRS.

Le TCP ACK de numéro « n+2 » est alors transmis par le MS au BSS (new cell), comme illustré en 23. Ce TCP ACK est re-transmis au SGSN par le BSS(new cell), comme illustré en 24, et sert de mise à jour de cellule pour le SGSN. Comme illustré en 25, le SGSN transmet alors un message FLUSH-LL qui commande au BSS(old cell) de re-router des LLC-PDU(s) non encore transmises dans le sens descendant, vers le BSS(new cell). Un message d'acquittement FLUSH-LL ACK est ensuite transmis par le BSS(old cell) au SGSN, comme illustré en 26.

Pour la reprise du transfert dans le sens descendant, le BSS(new cell) envoie alors au MS, comme illustré en 27, un message PACKET DOWNLINK ASSIGNMENT indiquant au MS les ressources en mode paquet qui lui sont allouées, en l'occurrence en mode EGPRS. Le transfert peut alors être repris dans la nouvelle cellule, entre le MS et le BSS(new cell), comme illustré en 28, où un segment TCP ayant comme numéro de séquence « n+2 » est transmis dans le sens descendant, et un acquittement TCP ACK ayant comme numéro « n+3 » est transmis dans le sens montant.

Un deuxième scenario correspond au cas où le MS n'a pas de LLC PDU à envoyer.

Ce deuxième scenario correspond à l'exemple illustré sur la figure 3. En effet, dans cet exemple, avant de passer à l'état 2', des segments TCP ayant comme numéros de séquence « n » et « n+1 » ont été transmis dans le sens descendant, et des acquittements TCP ACK ayant comme numéro « n+1 » et « n+2 » ont été transmis dans le sens montant.

Dans ce cas, comme illustré en 21', le MS requiert un UL TBF pour envoyer un message de mise à jour de cellule (« cell update »), et dans l'état actuel de la norme, le MS ne peut le faire qu'au moyen du message CHANNEL REQUEST (avec la cause « accès en une phase » ou « one phase access ») ou au moyen du message PACKET CHANNEL REQUEST (avec la cause « mise à jour de cellule » ou « cell update »). Malheureusement le réseau ne saura pas que la station mobile supporte l'EGPRS, ce qui signifie que le réseau n'a pas d'autre choix que d'allouer un UL TBF dans le mode GPRS, comme illustré en 22' par l'envoi d'un message PACKET UPLINK ASSIGNMENT. Un message de mise à jour de cellule (ou « cell update ») est ensuite transmis du MS au BSS(new cell), comme illustré en 23' (en fait il s'agit d'une LLC PDU vide). Ce message de mise à jour de cellule est re-transmis au SGSN par le BSS(new cell), comme illustré en 24'. Comme illustré en 25', le SGSN transmet alors un message FLUSH-LL qui commande au BSS(old cell) de re-router des LLC-PDU(s) non encore transmises dans le sens descendant, vers le BSS(new cell). Un message d'acquittement FLUSH-LL ACK est ensuite transmis par le BSS(old cell) au SGSN, comme illustré en 26'. Dans ce deuxième scenario on peut alors distinguer deux cas possibles (on notera qu'on pourrait aussi distinguer deux cas possibles dans le premier scenario, mais ceci serait sans conséquence sur cet exposé des problèmes).

Un premier cas possible (correspondant à l'exemple illustré sur la figure 3) correspond au cas où le réseau peut établir le DL TBF (pour la reprise du transfert dans le sens descendant) sur le PACCH de l'UL TBF créé pour l'envoi du message de mise à jour de cellule. Pour la reprise du transfert dans le sens descendant, le BSS(new cell) envoie alors au MS, comme illustré en 27', un message PACKET DOWNLINK ASSIGNMENT indiquant au MS les ressources en mode paquet qui lui sont allouées, en l'occurrence en mode GPRS. Le transfert peut alors être repris, comme illustré en 28', où un segment TCP ayant comme numéro de séquence « n+2 » est transmis dans le sens descendant.

Dans ce premier cas possible, il sera donc nécessaire de changer ensuite de mode pour le TBF, et la seule façon de le faire sera alors de relâcher l'UL TBF, relâcher le DL TBF, puis ré-établir un DL TBF en mode EGPRS. Le relâchement de l'UL TBF est illustré par un état noté 29'. Comme illustré en 30', pendant l'état 29', un message PACKET UPLINK ACK/NACK incluant notamment un bit FAI (« Final ACK Indicator ») égal à 1, est transmis du BSS(new cell) au MS. Comme illustré par un état 31', le DL TBF est toujours en cours. Comme illustré en 32', pendant l'état 31', un segment TCP ayant comme numéro de séquence « n+3 » est transmis dans le sens descendant, puis un message PACKET CONTROL ACK est transmis de la station mobile vers la nouvelle cellule, comme illustré en 33'. Le relâchement du DL TBF puis le ré-établissement d'un DL TBF en mode EGPRS sont illustrés par un état noté 34'. Pendant l'état 34', un bloc de données RLC incluant notamment un bit FBI (« Final Block indicator ») égal à 1 est transmis dans le sens descendant, comme illustré en 35', puis un message PACKET DOWNLINK ACK/NACK incluant notamment un bit FAI (« Final ACK Indicator ») égal à 1, est transmis dans le sens montant, comme illustré en 36'. Une fois le DL TBF en mode GPRS relâché, un message PACKET DOWNLINK ASSIGNMENT peut ensuite être envoyé à la station mobile sur le canal PACCH, comme illustré en 37', ce message indiquant des ressources paquet allouées à la station mobile dans le sens descendant, en l'occurrence en mode EGPRS. Le transfert dans le sens descendant est alors poursuivi en mode EGPRS, comme illustré en 38', où un segment TCP ayant comme numéro de séquence « n+4 » est transmis dans le sens descendant, et un acquittement TCP ACK ayant comme numéro « n+3 » est transmis dans le sens montant.

Ainsi que l'a observé le demandeur, un tel procédé n'est pas du tout optimal puisque le mode GPRS aura été utilisé pendant une partie du temps au lieu du mode EGPRS, et en outre du temps aura été perdu pour le changement de mode, du mode GPRS vers le mode EGPRS. Plus précisément, si l'on désigne par T le temps nécessaire pour reprendre le transfert dans le sens descendant en mode EGPRS dans le premier scénario où la station mobile a encore une ou plusieurs LLC PDU(s) à envoyer, et T' le temps nécessaire pour reprendre le transfert dans le sens descendant en mode EGPRS dans le deuxième scenario où la station mobile n'a pas de LLC PDU(s) à envoyer, le temps T' peut s'exprimer de la façon suivante :

$$T' = T + T1 + T2 + T3 + T4$$

où :

T1 est le temps nécessaire pour être sûr que le DL TBF est établi avec succès

T2 est le temps nécessaire pour relâcher l'UL TBF

T3 est le temps moyen nécessaire pour transférer la moitié d'une LLC PDU sur le TBF

T4 est le temps nécessaire pour relâcher le DL TBF

avec :

$$T1 = RTD + RRBP$$ (où RTD désigne le temps d'aller et retour, ou « Round-Trip-Time », entre la BSS et le MS ; RRBP désigne le temps nécessaire entre une invitation à émettre, transmise par le réseau, et la réponse de la station mobile)

$$T2 = RTD + RRBP$$

T3 = ½ T_llc_pdu_transfer (avec par exemple T_llc_pdu_transfer = 200ms dans le cas de débit égal à 2.5 kBps et d'une taille de LLC PDU de 500 octets)

$$T4 = RTD + RRBP.$$

En considérant des valeurs typiques de RTD = 120 ms et RRBP = 60 ms, ceci peut donc conduire dans certains cas à rester pendant au moins 640ms dans le mode GPRS, au lieu d'être dans le mode EGPRS.

Un deuxième cas possible dans le deuxième scenario (non illustré spécifiquement par une figure) correspond au cas où le réseau ne peut établir le DL TBF sur le PACCH de l'UL TBF créé pour l'envoi du message de mise à jour de cellule, mais où le réseau peut seulement établir le DL TBF sur les canaux de contrôle communs (P)CCCH, par conséquent après le relâchement de l'UL TBF créé pour l'envoi du message de mise à jour de cellule. Dans ce cas, le BSS(new cell) peut allouer directement des ressources en mode paquet en mode EGPRS. En effet, le BSS(newcell) a alors connaissance des capacités du MS, grâce à des informations correspondantes contenues dans les trames BSSGP reçues du SGSN. Mais ce procédé n'est pas non plus optimal à cause du temps perdu à attendre le relâchement de l'UL TBF avant de pouvoir établir le DL TBF sur les canaux (P)CCCH.

En résumé, et comme reconnu par le demandeur, des problèmes se posent, dûs à ces différents scenarios possibles pour la reprise du transfert dans le sens descendant, suivant que la station mobile a ou non des LLC PDU(s) dans sa mémoire tampon. Ceci conduit à un comportement incohérent dans le cas de re-sélection de cellule, d'autant que dans le cas d'application basée sur le protocole TCP, les deux cas peuvent se produire (la station mobile a ou non des LLC PDU(s) dans sa mémoire tampon), et par ailleurs, comme expliqué dans ce qui précède, le transfert dans le mode EGPRS est repris avec du retard dans le cas où la station mobile n'a pas de LLC PDU dans sa mémoire tampon.

L'exemple plus particulièrement décrit dans ce qui précède est le cas d'une mise à jour de cellule dans le cas de re-sélection de cellule dans le mode « packet transfer mode ». D'autres exemples sont également possibles, dans lesquels se posent des problèmes similaires, notamment l'exemple du « paging » en mode paquet. En effet, dans l'état actuel de la norme, lorsque le réseau envoie une requête de « paging » à une station mobile pour des services en mode paquet, la station mobile doit répondre au moyen d'un message CHANNEL REQUEST (avec une cause correspondant à un accès en une phase) ou au moyen d'un message PACKET CHANNEL REQUEST (avec une cause correspondant à une réponse à une requête de « paging ») et donc le réseau ne saura pas si la station mobile supporte l'EGPRS et établira un UL TBF dans le mode GPRS, même pour une station mobile supportant l'EGPRS. Lorsque le SGSN reçoit la réponse de la station mobile, il peut commencer à envoyer des LLC PDUs vers la bonne cellule, c'est-à-dire un transfert de données utilisateur dans le sens descendant peut alors commencer, mais des problèmes similaires à ceux décrits ci-dessus pour le cas de mise à jour de cellule se posent donc également, puisque si l'UL TBF est toujours en cours, alors le DL TBF devra être établi initialement en mode GPRS.

Comme reconnu par le demandeur, d'une manière générale les problèmes exposés précédemment concernent tout scenario conduisant une station mobile à requérir un UL TBF pour des besoins de transfert de données de signalisation, générant ensuite l'établissement d'un DL TBF pour le transfert de données utilisateur.

La présente invention a notamment pour but de résoudre tout ou partie de ces problèmes. Plus généralement, la présente invention a pour but d'optimiser les procédures d'allocation de ressources en mode paquet dans ces systèmes.

Un des objets de la présente invention est un procédé pour l'allocation de ressources en mode paquet dans un système de radiocommunications mobiles dans lequel différents types de requêtes de ressources en mode paquet peuvent être transmis au réseau par une station mobile, correspondant à différents modes de transfert pouvant être supportés par la station mobile, une station mobile pouvant utiliser l'un ou l'autre des types de requêtes correspondant à des modes de transfert qu'elle supporte, suivant ses besoins, procédé dans lequel, pour des besoins de transfert de données de signalisation dans le sens montant, ladite signalisation étant susceptible de générer une allocation de ressources en mode paquet dans le sens descendant pour des besoins de transfert de données utilisateur, une station mobile utilise un type de requête de ressources en mode paquet correspondant à un mode de transfert le plus adapté aux besoins dudit transfert de données utilisateur.

Un autre objet de l'invention est un procédé pour l'allocation de ressources en mode paquet dans un système de radiocommunications mobiles, dans lequel différents types de requêtes de ressources en mode paquet peuvent être transmis au réseau par une station mobile, correspondant à différents modes de transfert pouvant être supportés par la station mobile, une station mobile pouvant utiliser l'un ou l'autre des types de requêtes correspondant à des modes de transfert qu'elle supporte, suivant ses besoins, procédé dans lequel, pour des besoins de transfert de données de signalisation, une station mobile utilise un type de requête de ressources en mode paquet correspondant à un mode de transfert le plus adapté aux besoins d'un transfert de données utilisateur, incluant une cause spécifiant des besoins de transfert de données de signalisation.

Suivant une autre caractéristique, différents modes de transfert supportés correspondent à différents débits possibles.

Suivant une autre caractéristique, différents débits possibles correspondent à différents schémas de modulation possibles.

Suivant une autre caractéristique, différents modes de transfert incluent les modes GPRS (« General Packet Radio Service ») et EGPRS (« Enhanced General Packet Radio Service »).

Suivant une autre caractéristique, un mode de transfert le plus adapté aux besoins de transfert de données utilisateur correspond à un mode de transfert autorisant des débits les plus élevés.

Suivant une autre caractéristique, un mode de transfert le plus adapté aux besoins de transfert de données utilisateur correspond au mode EGPRS (« Enhanced General Packet Radio Service »).

Suivant une autre caractéristique, lesdits besoins de transfert de données de signalisation incluent des besoins de transfert de messages de signalisation selon un protocole de gestion de mobilité.

Suivant une autre caractéristique, lesdits messages de signalisation incluent un message de mise à jour de cellule transmis dans le cas de re-sélection de cellule pendant un transfert de données utilisateur en cours.

Suivant une autre caractéristique, lesdits messages de signalisation incluent un message de réponse à une requête de « paging » préalable à un transfert de données utilisateur dans le sens descendant.

Suivant une autre caractéristique, ledit transfert de données utilisateur inclut un transfert de données selon un protocole de type TCP (« Transmission Control Protocol »).

Suivant une autre caractéristique, un type de requête de ressources en mode paquet correspondant à un mode de transfert le plus adapté aux besoins dudit transfert de données utilisateur inclut une cause spécifiant lesdits besoins de transfert de données de signalisation.

Suivant une autre caractéristique, un type de requête de ressources en mode paquet correspondant à un mode de transfert le plus adapté aux besoins dudit transfert de données utilisateur et n'incluant pas de cause spécifiant lesdits besoins de transfert de données de signalisation est utilisé pour lesdits besoins de transfert de données de signalisation.

Suivant une autre caractéristique, un message utilisé pour transmettre ledit type de requête de ressources en mode paquet correspondant à un mode de transfert le plus adapté aux besoins d'un transfert de données utilisateur est le message EGPRS PACKET CHANNEL REQUEST.

Suivant une autre caractéristique, le message EGPRS PACKET CHANNEL REQUEST inclut une cause spécifiant des besoins de transfert de données de signalisation.

Un autre objet de la présente invention est une station mobile, comportant des moyens pour mettre en oeuvre un procédé suivant l'invention.

Un autre objet de la présente invention est un équipement de réseau de radiocommunications mobiles, comportant des moyens pour mettre en oeuvre un procédé suivant l'invention.

Un autre objet de la présente invention est un système de radiocommunications mobiles, comportant des moyens pour mettre en oeuvre un procédé suivant l'invention.

D'autres objets et caractéristiques de la présente invention apparaîtront à la lecture de la description suivante d'un exemple de réalisation, faite en relation avec les dessins ci-annexés dans lesquels:

- la figure 1 rappelle l'architecture générale d'un système de radiocommunications mobiles en mode paquet,
- les figures 2 et 3 rappellent différentes procédures pouvant être utilisées, dans l'état actuel de la norme, pour la reprise de transfert de données dans le cas de re-sélection de cellule,
- la figure 4 est destinée à illustrer un exemple de procédé suivant l'invention, à titre d'exemple pour la reprise de transfert de données dans le cas de re-sélection de cellule.

Dans l'exemple d'application à la re-sélection de cellule dans le cas de mode « packet transfer mode », l'invention suggère d'autoriser une station mobile à utiliser le message EGPRS PACKET CHANNEL REQUEST dans le cas de mise à jour de cellule, que cette station mobile ait ou non des LLC PDU(s) à envoyer après commutation vers la nouvelle cellule.

Ceci permet alors au réseau de savoir que la station mobile supporte l'EGPRS, ce qui autorise le réseau à allouer un UL TBF en mode EGPRS. Le DL TBF, de préférence établi sur le PACCH de l'UL TBF de façon à accélérer la reprise du transfert, peut alors être établi directement dans le mode EGPRS.

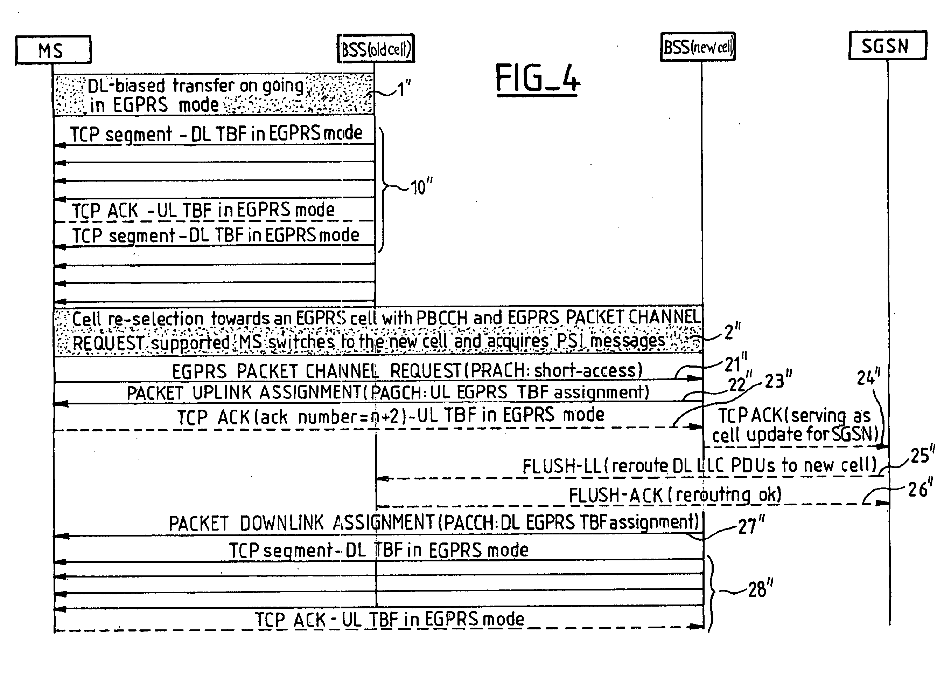

Un exemple de procédé suivant l'invention, correspondant à titre d'exemple au cas d'application à la re-sélection de cellule dans le cas de mode « packet transfer mode », est illustré sur la figure 4.

Dans l'exemple illustré sur la figure 4, on considère un état initial, noté 1", correspondant, comme dans l'exemple illustré sur les figures 2 et 3, à un transfert de données en cours entre un équipement noté MS (ou station mobile) et un équipement noté BSS, en l'occurrence le BSS d'une ancienne cellule, ou « BSS(old cell) », avant changement de cellule. Par exemple, comme illustré en 10", des segments TCP (« TCP segments ») peuvent être transmis dans le sens descendant, et des acquittements (« TCP ACK ») peuvent être transmis dans le sens montant.

On considère ensuite le cas d'un changement de cellule. Comme dans l'exemple illustré sur les figures 2 et 3, on se place dans le cas où le MS a déterminé une re-sélection de cellule et où le MS a effectué avec succès les opérations nécessaires pour se connecter à la nouvelle cellule re-sélectionnée. L'état correspondant est noté 2" sur la figure 4. Comme dans l'exemple illustré sur les figures 2 et 3, on considère en outre l'exemple d'une nouvelle cellule (ou cellule re-sélectionnée) qui supporte le canal PBCCH et le message EGPRS PACKET CHANNEL REQUEST.

Dans l'exemple illustré, l'invention propose que le MS envoie au réseau un message EGPRS PACKET CHANNEL REQUEST, comme illustré en 21", que le MS ait ou non encore une ou plusieurs LLC PDU(s) à envoyer au réseau (correspondant notamment à des acquittements TCP ACKs qui n'ont pas pu être envoyés dans l'ancienne cellule). Par ce moyen, le BSS(new cell) sait que le MS supporte l'EGPRS. Le BSS(new cell) peut alors allouer un UL TBF dans le mode EGPRS, comme illustré en 22" par l'envoi d'un message PACKET UPLINK ASSIGNMENT, et il pourra ensuite reprendre le transfert dans le sens descendant dans le mode EGPRS.

La reprise du transfert peut alors être effectuée au moyen d'étapes similaires aux étapes 23 à 28 illustrées sur la figure 2, et notées ici 23" à 28".

Comme indiqué précédemment, l'invention n'est pas limitée au cas d'application à la resélection de cellule dans le cas de mode « packet transfer mode ». D'une manière générale, l'invention s'applique à tout système de radiocommunications mobiles dans lequel différents types de requêtes de ressources en mode paquet peuvent être transmis au réseau par une station mobile, correspondant à différents modes de transfert pouvant être supportés par la station mobile, et dans lequel une station mobile peut utiliser l'un ou l'autre des types de requêtes correspondant à des modes de transfert qu'elle supporte, suivant ses besoins. Suivant un de ses différents aspects, l'invention propose que, pour des besoins de transfert de données de signalisation dans le sens montant, ladite signalisation étant susceptible de générer une allocation de ressources en mode paquet dans le sens descendant pour des besoins de transfert de données utilisateur, une station mobile utilise un type de requête de ressources en mode paquet correspondant à un mode de transfert le plus adapté aux besoins dudit transfert de données utilisateur.

Différents modes de transfert supportés correspondent notamment à différents débits possibles.

Différents débits possibles correspondent notamment à différents schémas de modulation possibles.

Notamment, différents modes de transfert incluent les modes GPRS (« General Packet Radio Service ») et EGPRS (« Enhanced General Packet Radio Service »).

Notamment, un mode de transfert le plus adapté aux besoins de transfert de données utilisateur correspond à un mode de transfert autorisant des débits les plus élevés.

Notamment, un mode de transfert le plus adapté aux besoins de transfert de données utilisateur correspond au mode EGPRS (« Enhanced General Packet Radio Service »).

Notamment, lesdits besoins de transfert de données de signalisation incluent des besoins de transfert de messages de signalisation selon un protocole de gestion de mobilité.

Notamment, lesdits messages de signalisation incluent un message de mise à jour de cellule transmis dans le cas de re-sélection de cellule pendant un transfert de données utilisateur en cours.

Notamment, lesdits messages de signalisation incluent un message de réponse à une requête de « paging » en mode paquet préalable à un transfert de données utilisateur dans le sens descendant.

Suivant d'autres aspects de l'invention, plusieurs possibilités peuvent être utilisées pour introduire l'idée de base selon l'invention dans la norme relative au système GSM/GPRS.

Suivant une possibilité, de nouvelles causes peuvent être introduites dans le message EGPRS PACKET CHANNEL REQUEST, telles que notamment les causes « mise à jour de cellule » (ou « cell update »), et « réponse à une requête de paging » (ou « page response »). Il peut alors être spécifié que la station mobile peut ou doit utiliser une de ces causes lorsque la cellule supporte le message EGPRS PACKET CHANNEL REQUEST et lorsque la station mobile souhaite envoyer des données de signalisation telles que notamment une mise à jour de cellule suite à une re-sélection de cellule pendant un transfert de données (et la station mobile n'a pas de LLC PDU(s) à envoyer au réseau), ou une réponse à une requête de « paging » en mode paquet.

Suivant une autre possibilité, une station mobile supportant l'EGPRS est autorisée à utiliser une des causes existantes prévues dans le message EGPRS PACKET CHANNEL REQUEST (notamment une cause correspondant à un accès appelé « short acces » ou à un accès en une seule phase ou « one phase access ») lorsqu'elle souhaite envoyer des données de signalisation telles que notamment une mise à jour de cellule, ou une réponse à une requête de « paging » en mode paquet.

Plus généralement, suivant une possibilité, un type de requête de ressources en mode paquet correspondant à un mode de transfert le plus adapté aux besoins d'un transfert de données utilisateur inclut une cause spécifiant des besoins de transfert de données de signalisation. Suivant une autre possibilité, un type de requête de ressources en mode paquet correspondant à un mode de transfert le plus adapté aux besoins dudit transfert de données utilisateur et n'incluant pas de cause spécifiant lesdits besoins de transfert de données de signalisation est utilisé pour lesdits besoins de transfert de données de signalisation. Notamment, ledit message utilisé pour transmettre ledit type de requête est le message EGPRS PACKET CHANNEL REQUEST.

La présente invention a également pour objet, outre un tel procédé, notamment une station mobile, un équipement de réseau de radiocommunications mobiles, et un système de radiocommunications mobiles, comportant des moyens pour mettre en oeuvre un tel procédé.

La réalisation particulière de tels moyens ne présentant pas de difficulté particulière pour l'homme du métier, de tels moyens ne nécessitent pas d'être décrits ici de manière plus détaillée que ce qui a été fait précédemment, par leur fonction.

## Revendications

1. Procédé pour l'allocation de ressources en mode paquet dans un système de radiocommunications mobiles, dans lequel différents types de requêtes de ressources en mode paquet peuvent être transmis au réseau (BSS) par une station mobile (MS), correspondant à différents modes de transfert pouvant être supportés par la station mobile, différents modes de transfert incluant les modes GPRS (« Général Packet Radio Service ») et EGPRS (« Enhanced Général Packet Radio Service »), une station mobile pouvant utiliser l'un ou l'autre des types de requêtes correspondant à des modes de transfert qu'elle supporte, suivant ses besoins, procédé **caractérisé en ce que**, pour des besoins de transfert de données de signalisation, une station mobile utilise un type de requête de ressources en mode paquet correspondant au mode EGPRS, incluant une cause spécifiant des besoins de transfert de données de signalisation.

2. Procédé selon la revendication 1 , dans lequel lesdits besoins de transfert de données de signalisation incluent des besoins de transfert de messages de signalisation selon un protocole de gestion de mobilité.

3. Procédé selon la revendication 2, dans lequel lesdits messages de signalisation incluent un message de mise à jour de cellule transmis dans le cas de re-sélection de cellule pendant un transfert de données utilisateur en cours.

4. Procédé selon la revendication 2, dans lequel lesdits messages de signalisation incluent un message de réponse à une requête de « paging » en mode paquet préalable à un transfert de données utilisateur dans le sens descendant.

5. Procédé selon l'une des revendications 1 à 4, dans lequel un transfert de données utilisateur inclut un transfert de données selon un protocole de type TCP (« Transmission Control Protocol »).

6. Procédé galon l'une des revendications 1 à 5, dans lequel un message utilisé pour transmettre un type de requête de ressources en mode paquet correspondant au mode EGPRS est le message EGPRS PACKET CHANNEL REQUEST.

7. Station mobile (MS), comportant :

des moyens pour transmettre au réseau (BSS) différents types de requêtes de ressources en mode paquet, correspondant à différents modes de transfert qu'elle supporte, différents modes de transfert incluant les modes GPRS (« Général Packet Radio Service ») et EGPRS (« Enhanced Général Packet Radio Service »), la station mobile utilisant l'un ou l'autre des types de requêtes correspondant aux modes de transfert qu'elle supporte, suivant ses besoins, la station mobile étant **caractérisée en ce qu'**elle utilise, pour des besoins de transfert de données de signalisation, un type de requête de ressources en mode paquet correspondant au mode EGPRS, incluant une cause spécifiant des besoins de transfert de données de signalisation.

8. Station mobile selon la revendication 7, dans laquelle lesdits besoins de transfert de données de signalisation incluent des besoins de transfert de messages de signalisation selon un protocole de gestion de mobilité.

9. Station mobile selon la revendication 8, dans laquelle lesdits messages de signalisation incluent un message de mise à jour de cellule transmis dans le cas de re-sélection de cellule pendant un transfert de données utilisateur en cours.

10. Station mobile selon la revendication 8, dans laquelle lesdits messages de signalisation incluent un message de réponse à une requête de « paging » en mode paquet préalable à un transfert de données utilisateur dans le sens descendant.

11. Station mobile selon l'une des revendications 7 à 10, dans laquelle un transfert de données utilisateur inclut un transfert de données selon un protocole de type TCP (« Transmission Control Protocol »).

**12.** Station mobile selon l'une des revendications 7 à 11, dans laquelle un message utilisé pour transmettre un type de requête de ressources en mode paquet correspondant au mode EGPRS est le message EGPRS PACKET CHANNEL REQUEST.

**13.** Equipement de réseau de radiocommunications mobiles (BSS), comportant :

des moyens pour recevoir d'une station mobile (MS) différents types de requêtes de ressources en mode paquet, correspondant à différents modes de transfert supportés par la station mobile, différents modes de transfert incluant les modes GPRS (« General Packet Radio Service ») et EGPRS (« Enhanced General Packet Radio Service »),

l'un ou l'autre des types de requêtes correspondant aux modes de transfert supportés par la station mobile, étant utilisé suivant les besoins de la station mobile,

lesdits différents types de requêtes de ressources en mode paquet incluant un type de requête de ressources en mode paquet correspondant au mode EGPRS, incluant une cause spécifiant des besoins de transfert de données de signalisation, utilisé pour des beoins de transfert de signalisation de la station mobile.

**14.** Equipement de réseau de radiocommunications mobiles selon la revendication 13, dans lequel lesdits besoins de transfert de données de signalisation incluent des besoins de transfert de messages de signalisation selon un protocole de gestion de mobilité.

**15.** Equipement de réseau de radiocommunications mobiles selon la revendication 14, dans lequel lesdits messages de signalisation incluent un message de mise à jour de cellule transmis dans le cas de re-sélection de cellule pendant un transfert de données utilisateur en cours.

**16.** Equipement de réseau de radiocommunications mobiles selon la revendication 15, dans lequel lesdits messages de signalisation incluent un message de réponse à une requête de « paging » en mode paquet préalable à un transfert de données utilisateur dans le sens descendant.

**17.** Equipement de réseau de radiocommunications mobiles selon l'une des revendications 13 à 16, dans lequel un transfert de données utilisateur inclut un transfert de données selon un protocole de type TCP (« Transmission Control Protocol »).

**18.** Equipement de réseau de radiocommunications mobiles selon l'une des revendications 13 à 17, dans lequel un message utilisé pour transmettre un type de requête de ressources en mode paquet correspondant au mode EGPRS est le message EGPRS PACKET CHANNEL REQUEST.

**Patentansprüche**

**1.** Verfahren zur Zuweisung von Ressourcen im Paketmodus in einem mobilen Funkkommunikationssystem, in welchem unterschiedliche Arten von Ressourcenanforderungen im Paketmodus durch eine Mobilstation (MS) an das Netzwerk (BSS) übertragen werden können, welche unterschiedlichen Übertragungsmodi, die von der Mobilstation unterstützt werden können, entsprechen, wobei die unterschiedlichen Übertragungsmodi den GPRS-Modus ("General Packet Radio Service") und den EGPRS-Modus ("Enhanced General Packet Radio Service") umfassen, wobei eine Mobilstation je nach Bedarf die eine oder andere Anforderungsart in Abhängigkeit von den von ihr unterstützten Übertragungsmodi benutzen kann, wobei das Verfahren **dadurch gekennzeichnet ist, dass** eine Mobilstation zum Zweck der Übertragung von Signalisierungsdaten eine Ressourcenanforderungsart im Paketmodus, welche dem EGPRS-Modus entspricht und einen Grund einschließt, der die Bedürfnisse der Übertragung von Signalisierungsdaten angibt, verwendet.

**2.** Verfahren nach Anspruch 1, wobei die besagten Bedürfnisse der Übertragung von Signalisierungsdaten Bedürfnisse der Übertragung von Signalisierungsnachrichten gemäß einem Mobilitätsverwaltungsprotokoll umfassen.

**3.** Verfahren nach Anspruch 2, wobei die besagten Signalisierungsnachrichten eine im Fall der Zellenneuauswahl während einer laufenden Übertragung von Benutzerdaten übertragene Zellenaktualisierungsnachricht umfassen.

**4.** Verfahren nach Anspruch 2, wobei die besagten Signalisierungsnachrichten eine Antwortnachricht auf eine "Paging"-Anforderung im Paketmodus vor einer Downlink-Übertragung von Benutzerdaten umfassen.

**5.** Verfahren nach einem der Ansprüche 1 bis 4, wobei eine Übertragung von Benutzerdaten eine Übertragung von Daten gemäß einem Protokoll vom Typ TCP ("Transmission Control Protocol") umfasst.

**6.** Verfahren nach einem der Ansprüche 1 bis 5, wobei eine zur Übertragung einer Ressourcenanforderungsart im Paketmodus, welche dem EGPRS-Modus entspricht, verwendete Nachricht die Nachricht EGPRS PACKET CHANNEL REQUEST ist.

**7.** Mobilstation (MS), umfassend:

Mittel zum Übertragen unterschiedlicher Ressourcenanforderungsarten im Paketmodus, welche verschiedenen von ihr unterstützten Übertragungsmodi entsprechen, an das Netzwerk (BSS), wobei die verschiedenen Übertragungsmodi den GPRS-Modus ("General Packet Radio Service") und den EGPRS-Modus ("Enhanced General Packet Radio Service") einschließen, wobei die Mobilstation je nach Bedarf die eine oder andere Anforderungsart, welche den von ihr unterstützten Übertragungsmodi entspricht, verwendet, wobei die Mobilstation **dadurch gekennzeichnet ist, dass** sie zum Zweck der Übertragung von Signalisierungsdaten eine Ressourcenanforderungsart im Paketmodus, welche dem EGPRS-Modus entspricht und einen Grund einschließt, der die Bedürfnisse der Übertragung von Signalisierungsdaten angibt, verwendet.

**8.** Mobilstation nach Anspruch 7, wobei die besagten Bedürfnisse der Übertragung von Signalisierungsdaten Bedürfnisse der Übertragung von Signalisierungsnachrichten gemäß einem Mobilitätsverwaltungsprotokoll einschließen.

**9.** Mobilstation nach Anspruch 8, wobei die besagten Signalisierungsnachrichten eine im Fall der Zellenneuauswahl während einer laufenden Übertragung von Benutzerdaten übertragene Zellenaktualisierungsnachricht umfassen.

**10.** Mobilstation nach Anspruch 8, wobei die besagten Signalisierungsnachrichten eine Antwortnachricht auf eine "Paging"-Anforderung im Paketmodus vor einer Übertragung von Benutzerdaten in Downlink-Richtung umfassen.

**11.** Mobilstation nach einem der Ansprüche 7 bis 10, wobei eine Übertragung von Benutzerdaten die Übertragung von Daten gemäß einem Protokoll vom Typ TCP ("Transmission Control Protocol") umfasst.

**12.** Mobilstation nach einem der Ansprüche 7 bis 11, wobei eine für die Übertragung einer Ressourcenanforderungsart im Paketmodus, welche dem EGPRS-Modus entspricht, verwendete Nachricht die Nachricht EGPRS PACKET CHANNEL REQUEST ist.

**13.** Mobilfunkkommunikationsnetz-Einrichtung (BSS), umfassend:

Mittel zum Empfangen, von einer Mobilstation (MS), unterschiedlicher Ressourcenanforderungsarten im Paketmodus, welche verschiedenen von der Mobilstation unterstützten Übertragungsmodi entsprechen, wobei die verschiedenen Übertragungsmodi den GPRS-Modus ("General Packet Radio Service") und den EGPRS-Modus ("Enhanced General Pakket Radio Service") umfassen, wobei die eine oder andere der Anforderungsarten, welche den von der Mobilstation unterstützten Übertragungsmodi entsprechen, gemäß den Bedürfnissen der Mobilstation verwendet wird, wobei die besagten unterschiedlichen Ressourcenanforderungsarten im Paketmodus eine dem EGPRS-Modus entsprechende Ressourcenanforderungsart umfassen, welche einen Grund einschließt, der die Bedürfnisse der Übertragung von Signalisierungsdaten angibt, und für die Bedürfnisse der Signalisierungsübertragung der Mobilstation verwendet wird.

**14.** Mobilfunkkommunikationsnetz-Einrichtung nach Anspruch 13, wobei die besagten Bedürfnisse der Übertragung von Signalisierungsdaten Bedürfnisse der Übertragung von Signalisierungsnachrichten gemäß einem Mobilitätsverwaltungsprotokoll einschließen.

**15.** Mobilfunkkommunikationsnetz-Einrichtung nach Anspruch 14, wobei die besagten Signalisierungsnachrichten eine im Fall der Zellenneuauswahl während einer laufenden Übertragung von Benutzerdaten übertragene Zellenaktualisierungsnachricht umfassen.

**16.** Mobilfunkkommunikationsnetz-Einrichtung nach Anspruch 15, wobei die besagten Signalisierungsnachrichten eine Antwortnachricht auf eine "Paging"-Anforderung im Paketmodus vor einer Übertragung von Benutzerdaten in Downlink-Richtung umfassen.

**17.** Mobilfunkkommunikationsnetz-Einrichtung nach einem der Ansprüche 13 bis 16, wobei eine Übertragung von Benutzerdaten eine Übertragung von Daten gemäß einem Protokoll vom Typ TCP ("Transmission Control Protocol") umfasst.

**18.** Mobilfunkkommunikationsnetz-Einrichtung nach einem der Ansprüche 13 bis 17, wobei eine für die Übertragung einer Ressourcenanforderungsart im Paketmodus, welche dem EGPRS-Modus entspricht, verwendete Nachricht die Nachricht EGPRS PACKET CHANNEL REQUEST ist.

**Claims**

**1.** A method for allocating packet mode resources in a mobile radio communication system, wherein different types of packet mode resources may be transmitted to the network (BSS) by a mobile station (MS), corresponding to different transfer modes that may be supported by the mobile station, different transfer modes including GPRS ("General Packet Radio Service") and EGPRS ("Enhanced General Packet Radio Service") modes, with a mobile station potentially using either one of the request types corresponding to transfer modes that it supports, in accordance with its needs, which method is **characterized in that**, for signaling data transfer needs, a mobile station uses a type of packet mode resource request corresponding to EGPRS mode, including a cause specifying signaling data transfer needs.

2. A method according to claim 1, wherein said signaling data transfer needs include signaling message transfer needs according to a mobility management protocol.

3. A method according to claim 2, wherein said signaling messages include a cell update message transmitted if a cell is re-selected during a user data transfer that is underway.

4. A method according to claim 2, wherein said signaling messages include a reply message to a packet-mode paging request prior to a transfer of user data in the downlink direction.

5. A method according to any one of the claims 1 to 4, wherein a user data transfer includes a data transfer according to a TCP ("Transmission Control Protocol") protocol.

6. A method according to any one of the claims 1 to 5, wherein a message used to transmit a type of packet-mode resource request corresponding to EGPRS mode is the EGPRS PACKET CHANNEL REQUEST message.

7. A mobile station (MS), comprising:

   means for transmitting to the network (BSS) different types of packet-mode resource requests, corresponding to different transfer modes that it supports, different transfer modes including GPRS ("General Packet Radio Service") and EGPRS ("Enhanced General Packet Radio Service") modes,
   the mobile station using either one of the types of requests that correspond to the transfer modes that it supports, depending on its needs, the mobile station being **characterized in that** it uses, for signaling data transfer needs, a type of packet-mode resource request corresponding to EGPRS mode, including a cause specifying signaling data transfer needs.

8. A mobile station according to claim 7, wherein said signaling data transfer needs include signaling message transfer needs in accordance with a mobility management protocol.

9. A mobile station according to claim 8, wherein said signaling messages include a cell update message transmitted if a cell is re-selected during a user data transfer that is underway.

10. A mobile station according to claim 8, wherein said signaling messages include a reply message to a packet-mode paging request prior to a transfer of user data in the downlink direction.

11. A mobile station according to one of the claims 7 to 10, wherein a user data transfer includes a data transfer according to a TCP protocol ("Transmission Control Protocol").

12. A mobile station according to one of the claims 7 to 11, wherein a message used to transmit a type of packet-mode resource request corresponding to EGPRS mode is the EGPRS PACKET CHANNEL REQUEST message.

13. A mobile radio communication network device (BSS), comprising means for receiving from a mobile station (MS) different types of packet-mode resource requests, corresponding to different transfer modes supported by the mobile station, different transfer modes including GPRS ("General Packet Radio Service") and EGPRS ("Enhanced General Packet Radio Service") modes,
either one of the types of requests corresponding to the transfer modes supported by the mobile station, being used in accordance with the mobile station's needs,
said different types of packet-mode resource requests including a type of packet-mode resource request corresponding to EGPRS mode, including a cause specifying signaling data transfer needs, used for the mobile station's signaling transfer needs.

14. A mobile radio communication network device according to claim 13, wherein said signaling data transfer needs include signaling message transfer needs in accordance with a mobility management protocol.

15. A mobile radio communication network device according to claim 14, wherein said signaling messages include a cell update message transmitted if a cell is re-selected during a user data transfer that is underway.

**16.** A mobile radio communication network device according to claim 15, wherein said signaling messages include a reply message to a packet-mode paging request prior to a transfer of user data in the downlink direction.

**17.** A mobile radio communication network device according to any one of the claims 13 to 16, wherein a user data transfer includes a data transfer according to a TCP ("Transmission Control Protocol") protocol.

**18.** A mobile radio communication network device according to any one of the claims 13 to 17, wherein a message used to transmit a type of packet-mode resource request corresponding to EGPRS mode is the EGPRS PACKET CHANNEL REQUEST message.

EP 1 389 889 B1

# FIG_1

15

## FIG_2

| MS | | BSS(old cell) | BSS(new cell) | SGSN |

DL biased transfer on going in EGPRS mode ⟶1

TCP segment(sequence number=n) - DL TBF in EGPRS mode

TCP ACK(ack number=n+1) - UL TBF in EGPRS mode
TCP segment(sequence number=n+1) - DL TBF in EGPRS mode  } ~10

Cell re-selection towards an EGPRS cell with PBCCH and EGPRS PACKET CHANNEL REQUEST supported MS switches to the new cell and acquires PSI messages - UL LLC PDU is outstanding ⟶2

⟶21
EGPRS PACKET CHANNEL REQUEST (PRACH: short access) ⟶22
PACKET UPLINK ASSIGNMENT (PAGCH: UL EGPRS TBF assignment) ⟶23
TCP ACK (ack number =n+2) - UL TBF in EGPRS mode

TCP ACK(serving as cell update for SGSN) ⟶24

FLUSH-LL (reroute DL LLC PDUS to new cell) ⟶25

FLUSH-ACK (rerouting ok) ⟶26

PACKET DOWNLINK ASSIGNMENT (PACCH: DL EGPRS TBF assignment) ⟶27

TCP segment(sequence number =n+2) - DL TBF in EGPRS mode  } ~28

TCP ACK(ack number =n+3) - UL TBF in EGPRS mode

EP 1 389 889 B1

## FIG_3

| MS | BSS(old cell) | BSS(new cell) | SGSN |
|---|---|---|---|

DL-biased transfer on-going in EGPRS mode — 1'

TCP segment(sequence number=n)- DL TBF in EGPRS mode

TCP ACK (ack number=n+1)- UL TBF in EGPRS mode — 10'

TCP segment(sequence number=n+1) -DL TBF in EGPRS mode

TCP ACK(ack number= n+2)- UL TBF in EGPRS mode

Cell re-selection towards an EGPRS cell with PBCCH and EGPRS PACKET CHANNEL REQUEST supported: MS switches to the new cell and acquires PSI messages-no UL LLC PDU is outstanding — 2'

21' — PACKET CHANNEL REQUEST(PRACH:cell update)

PACKET UPLINK ASSIGNMENT(PAGCH:UL GPRS TBF assignment) — 24'

22' — Cell update — Cell update — 25'

23' — FLUSH-LL(reroute DL LLC PDus to new cell) — 25'

FLUSH-ACK(rerouting ok) — 26'

27' — PACKET DOWNLINK ASSIGNMENT(PACCH:DL GPRS TBF assignment)

TCP segment(sequence number=n+2)-DL TBF in GPRS mode

28' —

Release of the UL TBF — 30'

29' — PACKET UPLINK ACK/NACK(FAI=1,S/P=1)

DL TBF still on going — 31'

TCP segment (sequence number = n+3) DL TBF in GPRS mode — 32'

33' — PACKET CONTROL ACK

Release of the DL TBF and re-establishment in EGPRS mode-network waits for DL LLC PDU boundary — 34'

RLC data block(FBI=1,S/P=1) — 35'

36' — PACKET DL ACK/NACK(FAI=1)

37' — PACKET DOWNLINK ASSIGNMENT(PACCH:DL EGPRS TBF assignment)

TCP segment(sequence number=n+4)-DL TBF in EGPRS mode

38' — TCP ACK(ack number= n+5)-UL TBF in EGPRS mode

FIG_4

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **BAALACHANDRAN K et al.** MAC layer design for statistical multiplexing of voice and data over EG-PRS. *IEE,* 23 Septembre 2000, vol. 2, 913-923